(19) **Europäisches Patentamt / European Patent Office / Office européen des brevets**

(11) **EP 3 198 299 B1**

(12) **FASCICULE DE BREVET EUROPEEN**

(45) Date de publication et mention
de la délivrance du brevet:
**03.07.2019 Bulletin 2019/27**

(21) Numéro de dépôt: **15763624.2**

(22) Date de dépôt: **18.09.2015**

(51) Int Cl.:
*G01S 13/24* (2006.01)     *G01S 13/20* (2006.01)
*G01S 13/28* (2006.01)     *G01S 13/30* (2006.01)

(86) Numéro de dépôt international:
**PCT/EP2015/071397**

(87) Numéro de publication internationale:
**WO 2016/046070 (31.03.2016 Gazette 2016/13)**

(54) **PROCÉDÉ DE DÉTECTION RADAR, ET RADAR METTANT EN OEUVRE LE PROCÉDÉ**

RADARDETEKTIONSVERFAHREN UND RADAR ZUR IMPLEMENTIERUNG DES BESAGTEN
VERFAHRENS

RADAR DETECTION METHOD AND RADAR IMPLEMENTING SAID METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.09.2014 FR 1402140**

(43) Date de publication de la demande:
**02.08.2017 Bulletin 2017/31**

(73) Titulaire: **Thales
92400 Courbevoie (FR)**

(72) Inventeurs:
• **KEMKEMIAN, Stéphane
75014 Paris (FR)**

• **MONTIGNY, Richard
78851 Elancourt (FR)**
• **QUELLEC, Jean-Michel
78851 Elancourt (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**FR-A1- 2 987 453     US-A- 4 727 375
US-A- 5 808 580     US-A1- 2011 279 307
US-B1- 6 639 546**

**Description**

La présente invention concerne un procédé de détection radar ainsi qu'un radar mettant en oeuvre ce procédé. L'invention s'applique notamment pour des radars comportant des émetteurs à état solide. Plus généralement, elle s'applique pour des détections radar où le facteur de forme de l'onde émise est tel qu'il crée des éclipses de détection dues au masquage des impulsions reçues par les impulsions émises.

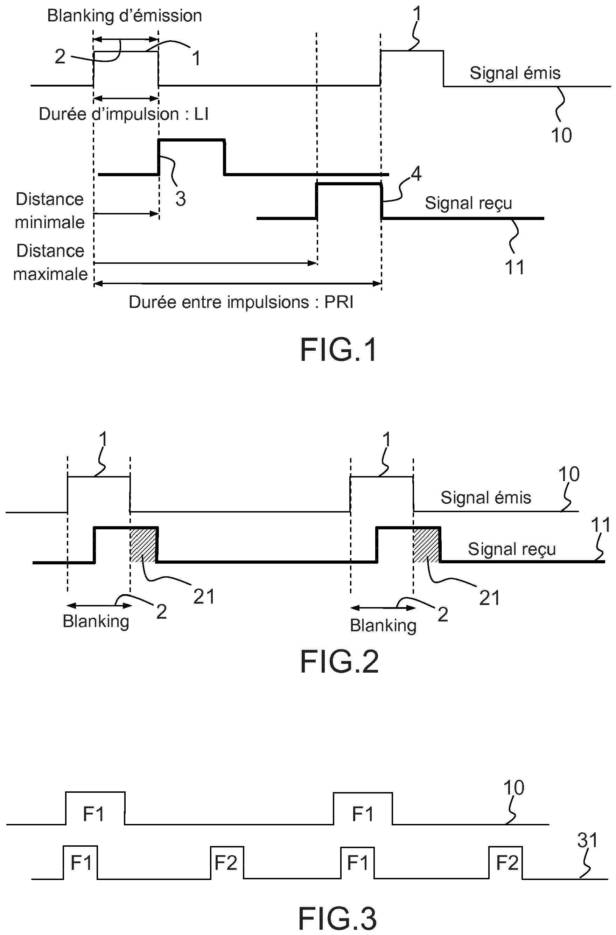

Le coût d'un système d'émission à état solide dépend en grande part de sa puissance crête, c'est-à-dire finalement du nombre et de la puissance des modules à semi-conducteurs RF qui sont nécessaires pour générer la puissance crête. En fait, la portée de détection d'une cible donnée ne dépend pas directement de puissance crête mais de la puissance moyenne, la portée augmentant avec la puissance moyenne. Si on cherche à obtenir le maximum de portée avec un coût minimum, il faut donc privilégier le rapport puissance moyenne sur puissance crête (Pmoy / Pcrête). En particulier il faut obtenir un rapport Pmoy / Pcrête le plus élevé possible. En référence à la figure 1, dans le cas d'un système qui émet un signal 10 des impulsions 1 de longueur LI = $\tau$ à la période de répétition PRI = $T_R$, il faut utiliser une émission dont le facteur de forme $\eta = \tau / T_R$ soit le plus élevé possible.

Sauf dans les cas d'applications particulières à faible puissance, quelques watts étant émis, un radar mono-statique ne peut émettre et recevoir simultanément. C'est ce que l'on appelle le « blanking d'émission » 2. Une certaine fraction du domaine en distance est par conséquent inutilisable, phénomène dit « éclipse en distance ».

L'accroissement du facteur de forme est donc limité en pratique par l'étendue tolérable des éclipses en distance. Dans le cas du procédé de détection le plus simple, la distance minimale correspond à la distance pour laquelle le front avant 3 de l'impulsion d'écho, du signal reçu 11, se situe juste après la fin de l'impulsion d'émission et la distance maximale correspond à la distance pour laquelle le front arrière 4 de l'impulsion d'écho se situe juste avant le début de l'impulsion d'émission suivante. En particulier, les méthodes de détection conventionnelles limite la distance minimale observable $D_{MIN}$ à :

$$D_{MIN} = c\frac{\tau}{2} = \eta c\frac{T_R}{2}$$

Dans un radar mono-statique notamment, les impulsions émises sont modulées par un ou plusieurs codes de manière à réaliser une compression d'impulsions et accroître la résolution en distance. Sans modulation d'impulsions, la résolution en distance serait $\delta R_0 = c\frac{\tau}{2} = D_{MIN}$.

Avec compression d'impulsion, cette résolution est abaissée à :

$$\delta R = c\frac{\tau}{2K_{CI}} < \delta R_0$$

où $K_{CI} > 1$ est le taux de compression, ce taux dépendant de la bande passante du code de compression.

Plusieurs solutions sont connues pour résoudre le problème de blanking d'émission. On peut distinguer le cas où des formes d'ondes sans compression d'impulsion et le cas des formes d'ondes avec compression d'impulsions. Dans le cas de formes d'ondes sans compression d'impulsions, lorsque les impulsions émises ne sont pas modulées, c'est-à-dire quand on ne cherche pas à obtenir une résolution en distance fine en utilisant un code de compression en distance, il est connu d'utiliser partiellement la fraction 21 de l'impulsion reçue qui ne se trouve pas masquée par le blanking d'émission 2 comme le montre la figure 2. Cette solution permet d'utiliser la totalité du domaine en distance, notamment à courte distance. Si une cible de surface équivalent radar (SER), notée $\sigma$, est présente à une distance R :

• Sa puissance incidente P est proportionnelle à : $P \sim \frac{\sigma}{R^4}$.

• L'utilisation d'une fraction d'impulsion réduit le rapport Signal à Bruit (SNR) d'un facteur compris entre $\left(\frac{2R}{c\tau}\right)^2 < 1$

et $\left(\frac{2R}{c\tau}\right) < 1$ (selon le procédé de filtrage « adapté » qui est utilisé).

Dans la zone « incomplète », le SNR est finalement proportionnel à un facteur compris entre $\left(\frac{2R}{c\tau}\right)^2 \frac{\sigma}{R^4}$ et $\left(\frac{2R}{c\tau}\right)\frac{\sigma}{R^4}$ :

lorsque la cible se rapproche, la variation du SNR est monotone et reste croissante même dans la zone incomplète.

Dans le cas de formes d'onde à compression d'impulsions, plusieurs solutions sont connues.

Une première solution à utiliser une forme d'onde dont la période de répétition PRI est réduite d'un facteur $N$ par rapport à la forme d'onde initiale. La durée d'impulsion est réduite du même facteur $N$, ce qui divise également par $N$ la longueur de la zone aveugle.

Avec uniquement ces modifications, la forme d'onde est généralement inopérante car sa fonction d'ambiguïté est tellement altérée qu'elle devient incompatible avec l'application. Par exemple, une forme d'onde non ambiguë en distance (cas d'une basse fréquence de récurrence, BFR) devient ambiguë en distance.

Pour que sa fonction d'ambiguïté ait la même période qu'auparavant, une solution, toujours connue, est d'émettre une succession de $N$ impulsions de fréquences différentes. L'espacement en fréquence de ces $N$ impulsions doit être tel que la fonction d'inter-corrélation entre ces impulsions soit suffisamment basse pour qu'on puisse dire sans ambiguïté de quelle impulsion provient un écho. La figure 3 montre une application de cette solution pour $N = 2$. Dans cet exemple, la forme d'onde initiale à impulsion longue est sans agilité de fréquence (émission toujours à $F_1$), mais cette solution connue s'applique aussi à des formes d'ondes agiles en fréquence. Dans la plus simple des réalisations connues, la réception est à bande étroite, c'est-à-dire que la largeur de bande du récepteur est adaptée à la bande d'une impulsion. On décale la fréquence centrale de réception pour recevoir les échos provenant de la pseudo-ambiguïté choisie, à $F_1$ ou à $F_2$ comme dans l'exemple de la figure 3, ou à $F_1$, à $F_2$ ou à $F_N$ dans le cas général. La figure 3 présente la forme d'onde initiale 10 avec des impulsions à la fréquence F1 et la forme d'onde 31 selon cette première solution, avec les impulsions aux fréquences F1 et F2. La réception sur une impulsion à F1 est effectuée pour les échos proches issus de l'impulsion précédente à F1 et la réception sur une impulsion F2 est effectuée pour les échos lointains issus de l'avant dernière impulsion à F2.

L'inconvénient de cette méthode simple est, qu'à un instant donné on ne peut recevoir que $1/N$ du domaine instrumenté. Il faut successivement recentrer le récepteur sur les $N$ fréquences pour recevoir l'ensemble du domaine instrumenté. Ceci se traduit :

- Soit par un rallongement du temps nécessaire à la veille de tout le domaine en distance, si on reste à temps d'observation constant pour une pseudo ambiguïté donnée ;
- Soir par une réduction du temps d'observation d'une pseudo-ambiguïté donnée si on veut conserver un temps d'observation de la totalité du domaine en distance constant, ce qui entraîne une perte de sensibilité.

L'ambiguïté en distance est la distance qui correspond à la durée du cycle $F_1$, $F_2$, ...$F_N$, la pseudo-ambiguïté évoquée ci-dessus est la distance qui correspond à une PRI entre deux impulsions successives $F_i$ et $F_{i+1}$.

Dans une réalisation plus avancée, la réception est à large bande, c'est-à-dire que la largeur de bande du récepteur couvre la totalité du spectre correspondant aux $N$ impulsions. Les signaux reçus dans les $N$ pseudo-ambiguïtés sont reçus simultanément et affectés à la bonne pseudo-ambiguïté grâce à un filtrage en fréquence adéquat, analogique ou numérique.

Cette solution réduit significativement le problème de la zone aveugle, importante. En revanche, elle crée un nouveau problème qui est l'apparition de N-2 zones aveugles dans la partie centrale du domaine en distance. Dans l'exemple de la figure 3, toute zone correspondant à l'émission $F_2$ et située au milieu du domaine distance est inutilisable. La zone concernée correspond à deux fois la longueur de l'impulsion. Cette zone de deux fois la longueur de l'impulsion correspond en effet à la zone où la compression d'impulsion incomplète. Cette première solution introduit donc un autre problème.

Une autre solution est notamment décrite dans la demande de brevet FR 2987453. Cette solution est une transposition du principe décrit précédemment, c'est-à-dire l'utilisation partielle d'une impulsion non modulée. On l'applique dans cette demande de brevet au cas où l'impulsion partiellement masquée contient un code de modulation particulier. Ceci est notamment le cas des compressions à modulation linéaire de fréquence (MLF). En effet, une fraction de code de compression MLF reste une MLF. Les propriétés d'autocorrélation d'une fraction de ce code restent favorables à la compression d'impulsions. Le procédé décrit dans cette demande de brevet FR 2987453 permet d'utiliser presque la totalité du domaine en distance, notamment le domaine à courte distance, mais au prix d'une perte progressive de la résolution en distance de la forme d'onde. Dans la zone de compression incomplète, on n'utilise en effet qu'une fraction de la bande émise par la MLF.

Un document US 5 808 580 décrit un procédé de détection radar utilisant une forme d'onde impulsionnelle.

Un but de l'invention est de l'invention est de pallier les inconvénients des solutions antérieures, afin notamment de permettre la détection de cibles proches tout en maintenant une résolution en distance constante sur tout le domaine en distance traité. A cet effet, l'invention a pour objet un procédé de détection radar, caractérisé en ce qu'il utilise une forme d'onde radar impulsionnelle, une impulsion étant subdivisée en N sous-impulsions jointives ayant chacune une fréquence porteuse propre modulée selon un code de modulation dans une bande de fréquence, N étant supérieur ou égal à deux, ledit procédé comportant les étapes suivantes :

- créer par filtrage N canaux de réception, adapté chacun à une sous-impulsion ;

- effectuer dans chaque canal une compression de ladite sous-impulsion ;
- réaligner temporellement les sous-impulsions comprimées ;
  le signal utile détecté étant obtenu à partir du résultat d'une fonction de combinaison des signaux comprimés réalignés dans N cases distance ($c1_i, c2_i ..., cN_i$), une case distance correspondant à chacune des N compressions d'impulsion, la fonction de combinaison dépendant du rang de la case distance où ladite fonction est appliquée,

au moins trois zones de distance étant préalablement définies, le résultat de la fonction de combinaison est :

- le signal comprimé de la dernière sous-impulsion pour les cases distances correspondant à la zone de faibles distances ;
- le minimum d'une fonction des amplitudes Ai des N compressions pour les cases distances appartenant à la zone de moyennes distances ;
- la moyenne d'une fonction des amplitudes Ai des N compressions pour les cases distances appartenant à la zone de grandes distances ;

Ai étant l'amplitude du signal comprimé pour la i$^{ème}$ sous-impulsion.

La bande de modulation est par exemple la même pour toutes les sous-impulsions. Les sous-impulsions ont par exemple même durée. Les fréquences porteuses sont par exemple espacées selon un pas de fréquence constant. Dans une forme d'onde possible, au moins deux sous-impulsions ont des codes de modulations différents. Au moins une sous-impulsion comporte par exemple un code de modulation de fréquence linéaire ou un code de modulation de phase par paliers. Dans une forme d'onde possible, seule la dernière impulsion est plus courte que les précédentes. L'onde est par exemple émise par un émetteur à état solide.

Lesdites fonctions sont par exemple des fonctions monotones, lesdites fonction étant dans la liste des fonctions f(x) suivantes : $f(x) = x$, $f(x) = \log(x)$, $f(x) = x^2$.

En réception les signaux étant numérisés avant filtrage, les N compressions sont par exemple effectuées en corrélant l'ensemble du signal reçu avec N répliques des sous-impulsions émises.

Une pré-intégration cohérente des signaux est par exemple effectuée sur M récurrences de signal à l'issue de chacune des N compressions d'impulsion, M étant supérieur ou égal à deux, la pré-intégration cohérente étant par exemple effectuée par une transformé de Fourier discrète sur M points des signaux obtenus dans une case distance donnée au cours desdites M récurrences. Ladite fonction de combinaison des signaux est par exemple appliquée après N compressions d'impulsions et M intégrations cohérentes sur M récurrences.

Dans les M récurrences, le code modulation est par exemple permuté d'impulsion à impulsion.

L'invention a également pour objet un radar comportant une chaîne de traitement mettant en oeuvre le procédé selon l'une quelconque des revendications précédentes, ladite chaîne effectuant la détection d'un signal au moyen de la fonction de combinaison. Ledit radar comporte par exemple une deuxième chaîne de traitement réalisant une compression à haute résolution des signaux reçus en constituant une bande synthétique à partir des N codes de modulations émis chacun autour de la fréquence porteuse de sa sous-impulsion correspondante. L'onde radar est par exemple au moyen d'un émetteur à état solide.

D'autres caractéristiques et avantages de l'invention apparaîtront à l'aide de la description qui suit, faite en regard de dessins annexés qui représentent :

- la figure 1, une illustration d'un domaine en distance utilisable ;
- la figure 2, un exemple d'utilisation d'une impulsion reçue partiellement masquée ;
- la figure 3, une solution connue pour réduire une zone aveugle de détection ;
- la figure 4, un exemple de forme d'onde utilisée dans le procédé selon l'invention, en émission et en réception sans éclipse en distance ;
- la figure 5, le même exemple de forme d'onde avec une éclipse en distance ;
- la figure 6, une méthode classique de post-intégration ;
- la figure 7, une méthode de post-intégration dans un procédé selon l'invention ;
- la figure 8, une illustration d'un exemple de fréquence instantanée de l'impulsion totale de l'onde émise ;
- la figure 9, une illustration de la compression des sous-impulsions en réception avec des répliques des sous-impulsions émises ;
- les figures 10a à 10d, des illustrations des réponses impulsionnelles reçues correspondant aux différentes sous-impulsions successives, dans le cas où toutes les impulsions sont visibles ;
- les figures 11a à 11d, des illustrations des réponses impulsionnelles reçues correspondant aux différentes sous-impulsions successives, dans le cas où l'impulsion totale est partiellement masquée ;
- les figures 12a à 12d, des illustrations des réponses impulsionnelles reçues correspondant aux différentes sous-impulsions successives, dans le cas où l'impulsion totale est fortement masquée ;

- les figures 13a à 13f, une illustration de compressions distance composites selon l'invention pour six cas de retard ;
- la figure 14, un autre exemple de forme d'onde radar selon l'invention.

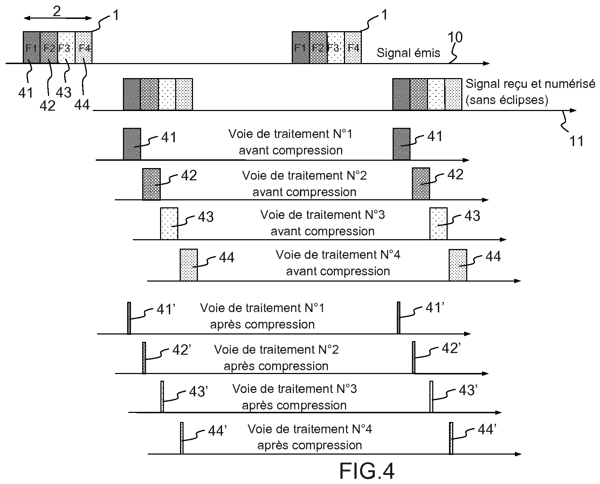

La figure 4 illustre le principe de réalisation d'une onde utilisé par le procédé l'invention. L'invention consiste à subdiviser chaque impulsion 1 du signal émis en N sous-impulsions 41, 42, 43, 44 orthogonales les unes des autres, en réception à réaliser sur chacune d'entre-elles une compression, à réaligner temporellement ces sous-compressions 41', 42', 43', 44' et à former une impulsion composite en utilisant ces N sous impulsions comprimées. Dans l'exemple de la figure 4, N = 4. De cette manière, même si l'impulsion reçue est partiellement masquée, une fraction non masquée existe, sur laquelle on peut réaliser une compression d'impulsion correcte permettant d'obtenir la résolution en distance nécessaire.

Plus précisément, dans un mode de fonctionnement cohérent, un traitement selon l'invention consiste par exemple à :

- Tronçonner les impulsions émises 1 en N sous-impulsions jointives 41, 42, 43, 44, dont la durée totale $\tau$ permet d'obtenir un facteur de forme élevé, chaque sous-impulsion ayant une durée $\tau' = \tau / N$, on entend par sous-impulsions jointives des impulsions exactement jointives ou quasi-jointives, c'est-à-dire séparées entre elles d'un intervalle de temps très inférieur à la durée d'impulsion ;
- Doter chaque sous-impulsion d'un code de modulation de bande B correspondant à la résolution en distance visée ;
- Caler en fréquence chaque sous-impulsion autour d'une fréquence porteuse particulière, F1, F2, F3, F4 dans le cas de la figure 4, l'espacement entre les N fréquences porteuses relatives aux N sous-impulsion étant suffisant pour séparer dans le domaine spectral les retours d'échos correspondant aux N sous-impulsions ;
- Recevoir et numériser en réception 45 la totalité de la bande utile occupée par les N sous-impulsions ;
- Créer, après la numérisation et par filtrage numérique N canaux de réception 46 dotés chacun des caractéristiques suivantes, i désignant la $i^{ème}$ sous-impulsion :

  - Le canal N° i est centré autour de la fréquence porteuse correspondant à la $i^{ème}$ sous-impulsion ;
  - La bande passante dudit canal est suffisamment petite pour que la réponse relative des autres sous-impulsions soit en dessous d'un certain seuil, par exemple -30 dB ;
  - La bande passante dudit canal est également suffisamment large pour laisser passer la $i^{ème}$ sous-impulsion sans distorsion notable ;
  - Une compression d'impulsion est réalisée dans chacun des canaux sur chacune des impulsions reçues 41', 42', 43', 44'.

Il est à noter que si la puissance de calcul est suffisante, une variante de réalisation peut consister à réaliser directement, sans filtrage numérique préalable, N corrélations correspondant aux N sous-impulsions.

Il est également à noter qu'il n'est pas nécessaire que les N codes de modulation associés aux N sous-impulsions soient identiques.

Il n'est pas non plus nécessaire que les N fréquences porteuses relatives aux N sous-impulsions soient régulièrement espacées. De même, les durées des N sous-impulsions peuvent être distinctes.

Plusieurs formes d'ondes sont en effet possibles dans un procédé selon l'invention, les codes de modulation ayant une faible corrélation entre sous-impulsions, caractérisant leur orthogonalité (cas d'intercorrélation nulle entre sous-impulsions). La bande de modulation peut être la même pour toutes les impulsions, ou peut-être différente d'une sous-impulsion à l'autre. La forme d'onde peut être constituée d'au moins deux codes de modulations distincts, tous les codes étant par exemple distincts les uns des autres. On peut utiliser exclusivement des modulations de phase ou des modulations de fréquence. Les modulations des fréquences porteuses peuvent être linéaires (LFM), avec des sens de variation quelconques d'une sous-impulsion à l'autre. Les codes peuvent aussi être à modulation de fréquence non linéaire, par exemple du type connu sous l'appellation « chirp en S », produisant des lobes secondaires plus faibles que les codes à modulation linéaire de fréquence. Les codes utilisés peuvent encore être à modulation de phase par paliers, produisant une succession d'états de phase à amplitude constante tels que les codes de phase pseudo-aléatoires, les codes de Barker ou les codes de Franck par exemple. A l'intérieur de l'impulsion, les codes de modulation peuvent être de différentes natures, un code LFM étant par exemple suivi par des codes de phase pseudo-aléatoires.

Pour illustrer le principe de l'invention, la figure 4 concerne un cas sans éclipse, les signaux n'étant pas masqués, totalement ou partiellement en réception.

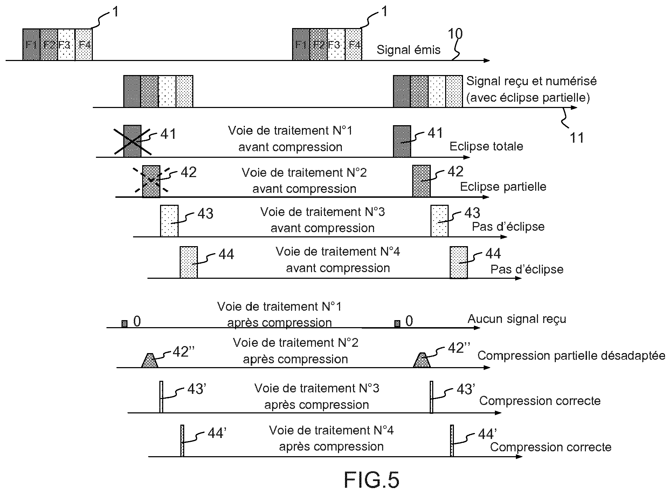

La figure 5 illustre la même forme d'onde que celle de la figure 4, mais dans un cas d'éclipse partielle en distance. Plus particulièrement dans cet exemple, la première sous-impulsion 41 est totalement éclipsée, la deuxième sous-impulsion 42 est partiellement éclipsée, les autres sous-impulsions 43, 44 n'étant pas éclipsées. Dans le canal de réception n° 1, il n'y a donc aucun signal reçu, dans le canal de réception n° 2, il y a une compression partielle désadaptée 42", les compressions 43', 44' étant correctes dans les canaux n°3 et n°4.

Dans chaque canal, on réalise une compression classique de la sous-impulsion correspondante. La compression de chaque sous-impulsion est effectuée systématiquement avec une réplique réduite du signal correspondant à cette sous-impulsion. En effet, au simple vu du signal reçu, le traitement radar ne peut savoir a priori si le masquage est partiel, ni quelle fraction de sous-impulsion est masquée.

Selon l'invention, les moyens de traitement en réception appliquent cependant les règles suivantes :

- Selon une première règle, tout signal comprimé observé dans l'intervalle de retard [0, $\tau$/N] correspond à des sous-impulsions totalement masquées, $\tau$/N étant la largeur d'une impulsion, et les compressions correspondantes produisent un résultat nul, sauf la dernière qui est partiellement masquée ;
- Selon une deuxième règle, tout signal comprimé observé dans l'intervalle de retard [$\tau$/N, 2 $\tau$/N] correspond à des sous-impulsions totalement masquées jusqu'à la sous-impulsion N-2 comprise, la N-1$^{\text{ème}}$ sous-impulsion est partiellement masquée, en revanche la dernière est totalement visible et la compression de cette dernière sous-impulsion est correcte ;
  et ainsi de suite jusqu'à l'intervalle [(N-1)$\tau$ / N, $\tau$] ;
- Selon une troisième règle, tout signal comprimé observé au-delà du retard $\tau$ correspond à des sous-impulsions totalement visibles et les compressions correspondantes sont correctes.

Après avoir réaligné temporellement les sous-impulsions comprimées, c'est-à-dire à faire en sorte que les échantillons de rang i de chacun des N vecteurs de signaux issus des N compressions d'impulsion correspondent au même écho comprimé situé au retard de propagation $t_i$, selon l'invention, on forme un vecteur de signal composite $C_i$, défini selon la relation suivante :

$$C_i = f_i(c1_i, c2_i, \dots, cN_i) \qquad (1)$$

Dans cette relation, $c1_i, c2_i, \dots, cN_i$ désignent les vecteurs de N compressions de sous-impulsions, réalignées temporellement, correspondant à l'amplitude du signal comprimé et $f_i$ désigne une fonction de combinaison des vecteurs issus de N compressions de sous-impulsions, la nature de cette fonction dépendant du rang i.

De cette manière, même si une partie plus ou moins grande de l'impulsion longue reçue est masquée, l'invention permet de réaliser une compression fournissant toujours la même résolution, au prix néanmoins d'une perte de l'énergie reçue exploitable, mais ceci étant compensé par le fait que, dans ce cas, les cibles en question sont à courte distance et renvoient par conséquent un écho puissant.

Il est à noter que l'émission d'une impulsion constituée d'une pluralité de sous-impulsions à des fréquences porteuses distinctes permet d'effectuer une émission en diversité de fréquence. La recombinaison non cohérente, en fonction de l'amplitude, des signaux comprimés issus de chacune des sous-impulsions permet de lutter contre le phénomène de fluctuation lente des cibles.

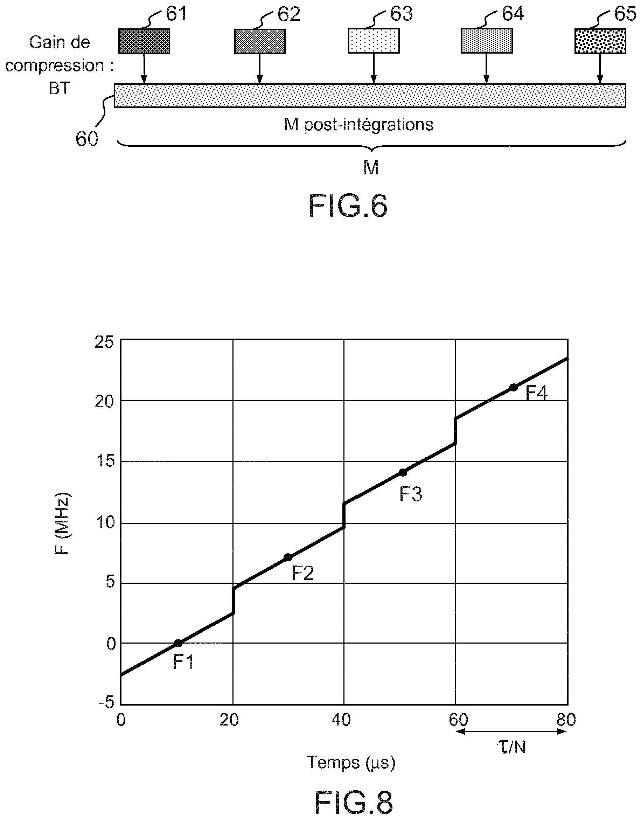

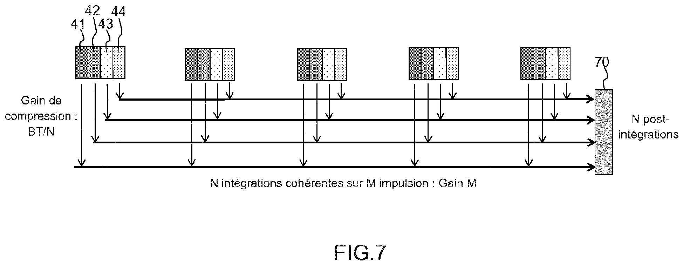

Dans les méthodes classique comme illustré par la figure 6, cet effet est obtenu en émettant successivement M impulsions 61, 62, 63, 64, 65, non subdivisées en sous-impulsions, à des fréquences porteuses distinctes, sur le temps long. Le gain de compression BT est maximal, toute l'impulsion étant comprimée sur le temps court. En revanche, la sommation 60 en amplitude d'impulsion à impulsion, correspondant à la post-intégration non cohérente, n'est pas optimales du point de vue du gain en sensibilité, le gain de post intégration étant environ égal à $\sqrt{M}$. Le gain global en sensibilité du traitement est donc environ égal à $Gc = BT\sqrt{M}$. Dans le cas de l'invention illustré par la figure 7, le gain de compression sur le temps court n'est pas maximal car on effectue des compressions sur des sous-impulsions, et non sur l'impulsion entière. Le gain de chacune des compressions de sous-impulsion vaut donc BT/N. Cependant, le fait d'émettre un signal à diversité de fréquence dans l'impulsion résout le problème lié à la fluctuation des cibles. Il est donc possible de réaliser N intégrations vectorielles, cohérentes, des signaux reçus, sur chacune des sous-impulsions, et sur la suite des M impulsions, une intégration cohérente donc de gain M. A l'issue de ces intégrations vectorielles, les N voies d'intégration vectorielles sont post-intégrées 70, de façon non-cohérentes, et le gain est d'environ $\sqrt{N}$. Le gain global du traitement est donc environ égal à :

$$G_I = \frac{BT}{N} M\sqrt{N} = BT \frac{M}{\sqrt{N}}$$

Il apparaît que si on choisit N et M tels que $\sqrt{N} \approx \sqrt{M}$, les deux méthodes sont sensiblement équivalente du point de vue de la sensibilité lorsqu'il n'y a aucune éclipse.

On décrit par la suite un mode réalisation particulier de l'invention. La figure 8 illustre la fréquence instantanée d'une impulsion totale dans ce mode de réalisation :

- Une impulsion est composée de N sous-impulsions, de même longueur τ/N, modulées linéairement en fréquence (MFL) sur une bande B ;
- Il y a un espacement régulier des porteuses F1, F2, F3, F4 de chaque sous-impulsion, égal à ∆F.

A titre d'exemple :

- Les impulsions ont une durée τ = 80 μs et subdivisées en N = 4 sous-impulsions de durées τ/N = 20 μs ;
- B = 5 MHz;
- Le taux de compression de chaque sous-impulsion est donc :

$$B.\tau/N = 100 \; ;$$

- Espacement des porteuses ∆F = 7 MHz.

La fréquence instantanée du signal émis est donc représentée par la figure 8. La description qui suit est réalisée dans le cas de sous-impulsions modulées linéairement en fréquence pour la simplicité de l'exposé de l'invention, mais l'invention est applicable à tous codes de modulation de sous-impulsions pourvu qu'on puisse trouver N codes présentant entre eux une inter-corrélation minimale, nulle dans le cas idéal, correspondant à des sous-impulsions orthogonales entre elles.

Chacune des sous-impulsions doit être comprimée séparément. Pour y parvenir, trois architectures de traitement sont possibles.

Dans une première architecture, on effectue un filtrage analogique des N sous-bandes correspondant à chacune des sous-impulsions. Dans cet exemple, la bande passante de chaque filtre est de l'ordre de B = 5 MHz avec un espacement entre fréquences centrales successives de ∆F égal à 7 MHz. A l'issue du filtrage analogique, les signaux contenus dans chaque sous-bande sont numérisés à une cadence supérieure à la largeur d'une sous-bande. N compressions d'impulsions sont ensuite réalisées selon les méthodes connues de l'homme du métier.

Dans une deuxième architecture possible, on effectue une numérisation des signaux reçus avant filtrage, à une cadence compatible de la bande spectrale totale de l'impulsion, soit dans le présent exemple à une cadence égale à :

$$(N − 1) \; \Delta F + B = 26 \text{ MHz.}$$

Les sous-bandes sont ensuite séparées au moyen de N filtres numériques sélectifs puis les signaux correspondant à chaque sous-bande sont décimés pour que la cadence résultante ne soit pas inutilement élevée vis-à-vis de la bande B de chaque sous-bande. N compressions d'impulsions sont ensuite réalisées selon des méthodes connues.

Dans une troisième architecture possible, on effectue une numérisation avant filtrage à une cadence correspondant à la bande spectrale totale de l'impulsion, soit dans le présent exemple à (N - 1) ∆F + B = 26 MHz. Les sous-bandes ne sont pas séparées mais on réalise sur l'ensemble directement N compressions d'impulsions selon les méthodes connues de l'homme du métier. Ces N compressions sont effectuées en corrélant l'ensemble du signal reçu avec N répliques, chacune correspondant à l'une des sous-impulsions.

La première architecture demande peu de vitesse de numérisation et exige le minimum de traitement numérique. En revanche, elle nécessite un circuit matériel analogique complexe au niveau des étages de fréquence intermédiaire du récepteur radar.

La troisième architecture est la plus souple. Elle exige toutefois des débits numériques élevés et une puissance de calcul importante. La deuxième architecture peut être considérée comme une variante de la troisième, les filtres permettant de réduire le débit de données avant les compressions proprement dites.

Il est à noter que les deuxième et troisième architectures, en particulier la troisième, bien que coûteuses en terme de puissance de calcul, font appel à des fonctionnalités systématiques, en particulier à des transformées de Fourier de grande taille. Ces fonctionnalités systématiques peuvent être intégrées dans des circuits tels que des FPGA (circuits programmables), des GPU (processeurs graphiques) ou des processeurs de traitement spécialisés. Ainsi, le reste du traitement moins systématique peut être implanté dans des processeurs d'usage général de puissance modérée.

La suite de la description concerne la troisième architecture, c'est-à-dire que l'ensemble du signal est corrélé avec un jeu de répliques, chacune correspondant à une sous-impulsion.

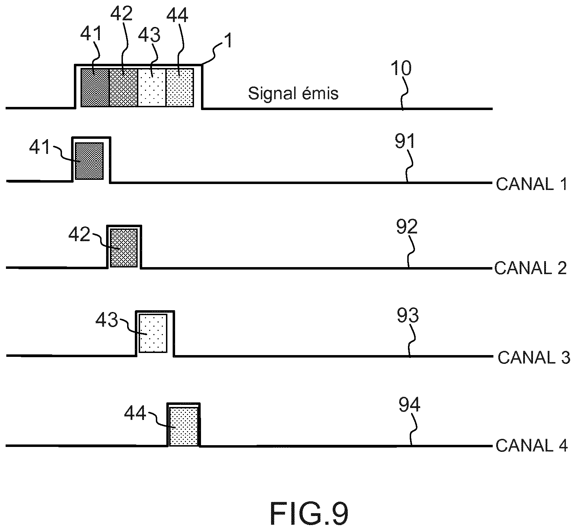

La figure 9 illustre la compression des sous-impulsions. La compression des sous-impulsions est une variante de la technique de compression classique bien connue. La principale différence réside dans l'utilisation d'une pluralité de N répliques 91, 92, 93, 94 du signal émis 10, chacune étant adaptée à l'une des sous-impulsions 41, 42, 43, 44 composant l'impulsion 1 proprement dite. Les réponses impulsionnelles varient selon le niveau d'éclipse de l'impulsion reçue. Les sous-impulsions sont modulées linéairement en fréquence et une pondération en amplitude de la réplique est par exemple utilisée pour arrondir le spectre de ladite réplique et par conséquent diminuer le niveau des lobes secondaires, par exemple vers -45 dB.

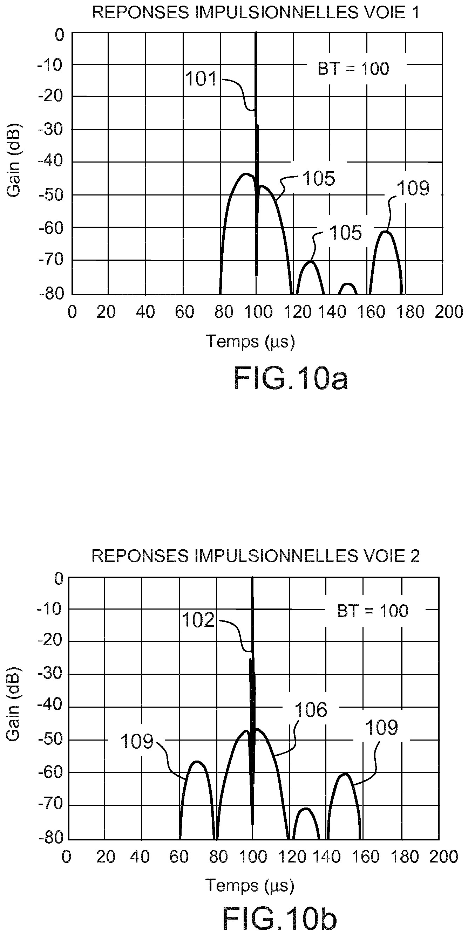

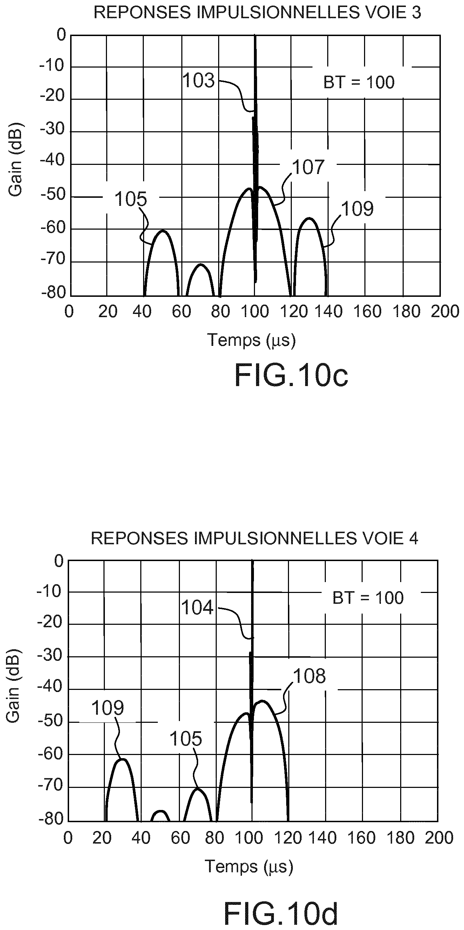

Les figures 10a à 10d illustrent respectivement les réponses impulsionnelles reçues sur les canaux de réception 1, 2, 3 et 4 correspondant respectivement aux sous-impulsions d'ordres 1, 2, 3 et 4, dans le cas où toutes les impulsions sont visibles ;

Outre les lobes secondaires classiques de compression 105, 106, 107, 108, de niveau voisin de - 45 dB et s'étendant sur $\pm$ 20 $\mu$s de part et d'autre des pics de corrélation 101, 102, 103, 104, les réponses présentent des corrélations parasites 109 sur les autres sous-impulsions, typiquement une corrélation de la sous-impulsion i avec la réplique de la sous-impulsion j, i et j étant différents. Ces impulsions parasites 109 s'étendent par exemple jusqu'à 80 $\mu$s des pics de corrélation, leur niveau étant voisin de - 60 dB.

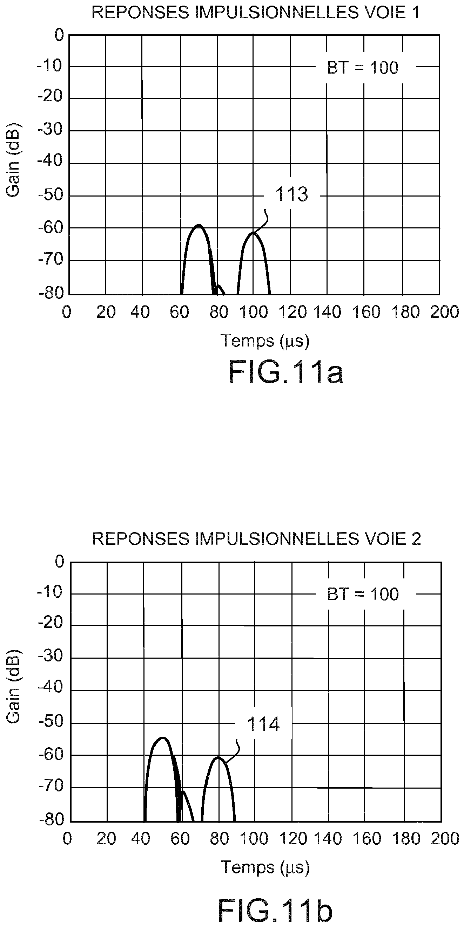

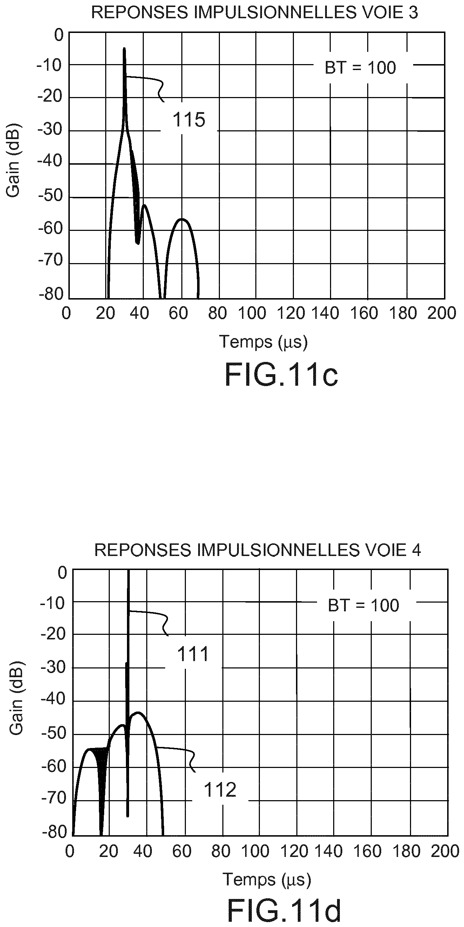

Les figures 11a à 11d présentent le cas où il y a masquage partiel de l'impulsion 1, toujours pour les mêmes canaux et sous-impulsions. Dans cet exemple, le retard de l'écho est de 30 $\mu$s. Les deux premières sous-impulsions, d'ordres 1 et 2 sont donc totalement masquées, la troisième sous-impulsion étant partiellement masquée et la quatrième sous-impulsion étant parfaitement visible. Dans ce cas, la compression de la quatrième et dernière sous-impulsion reste correcte, comme le montre le pic de corrélation 111 et les lobes secondaires 112 de sa réponse impulsionnelle, illustrés par la figure 11d. Les figures 11a et 11b, illustrant les réponses impulsionnelles sur les canaux de réception correspondant aux deux premières impulsions montrent l'absence de pic de corrélation et uniquement la présence de lobes de corrélations parasites 113, 114. La figure 11c correspondant à la troisième sous-impulsion, partiellement masquée, présente un pic de corrélation 115 moins prononcé témoignant d'une compression désadaptée, cette compression reste néanmoins acceptable.

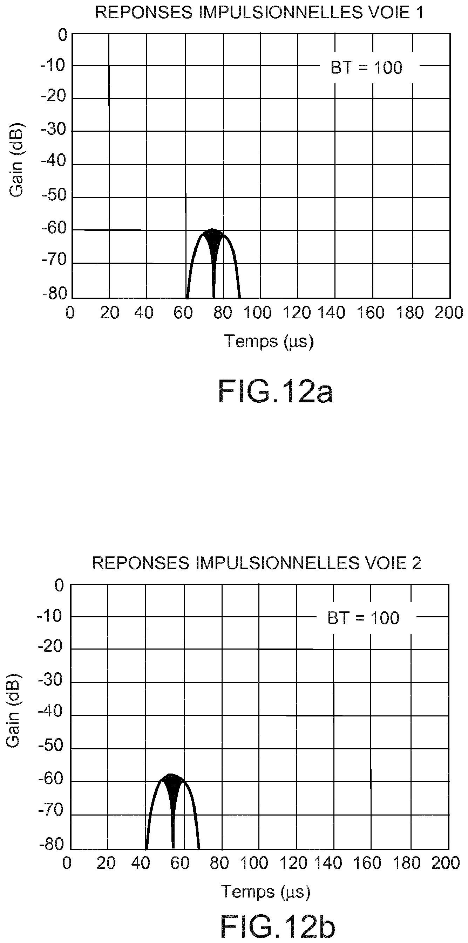

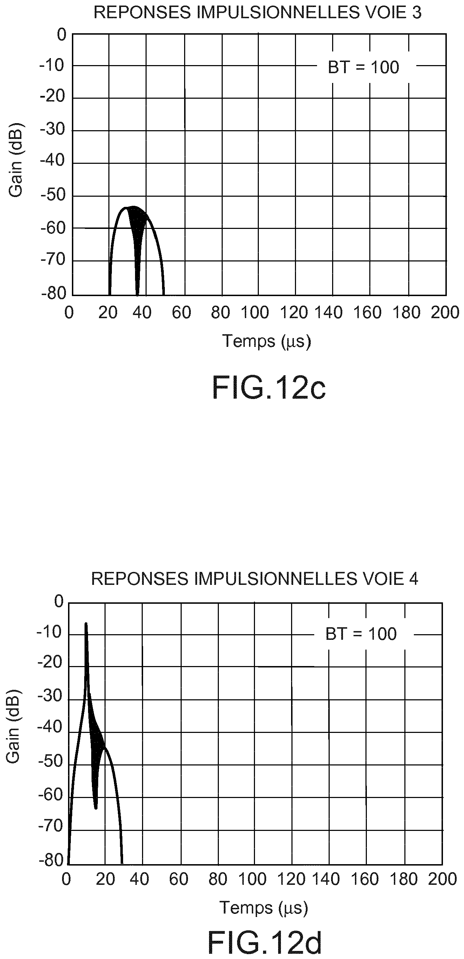

Dans un cas de fort masquage de l'impulsion 1, correspondant par exemple à un retard de 10 $\mu$s, aucune sous-impulsion n'est parfaitement visible, les trois premières sous-impulsions étant masquées et la quatrième partiellement masquée. La figure 12d illustre la réponse impulsionnelle de cette dernière impulsion, sur la voie 4. La compression reste acceptable et peut être exploitée comme le montre sont pic 121. Les figures 12a, 12b, 12c illustrent les réponses impulsionnelles sur les voies 1, 2 et 3, sous forme de lobes secondaires correspondant à l'intercorrélation de ces voies avec la voie 4.

Etant donné que l'impulsion d'émission 1 est exploitée en diversité de fréquence, cette diversité n'est plus nécessaire d'impulsion à impulsion pour réduire l'effet des fluctuations lentes d'une cible. On peut donc remplacer l'intégration non-cohérente, post-intégration, par une sommation vectorielle qui procure une meilleure sensibilité, comme illustré par la figure 7.

Si on dispose d'une séquence de M récurrence de signal, c'est-à-dire de M impulsions, l'intégration cohérente consiste, pour chaque case distance comprimée et pour chacune des voies de compression associée à une sous-impulsion donnée, à calculer la transformée de Fourier du vecteur de taille M constitué par les signaux reçus sur les M récurrences. En sortie de la transformée de Fourier, la cible est ainsi mise en évidence dans un filtre particulier correspondant à l'effet Doppler de la cible.

En sortie de cette intégration, formant une pré-intégration cohérente, on dispose ainsi d'un ensemble de données selon trois dimensions, formant un cube de données :

- La première dimension est le rang de case distance après compression des sous-impulsions, la longueur de l'ensemble de données étant égale au nombre de cases distance selon cette première dimension ;
- La deuxième dimension est le rang du filtre Doppler après la transformée de Fourier précédente, la longueur de l'ensemble de données étant égale à M selon cette première dimension ;
- La troisième dimension est le rang de sous-impulsion, la longueur de l'ensemble de données étant égal à M selon cette troisième dimension.

Chaque cellule de ce cube de données contient l'amplitude réelle du signal complexe obtenu après la transformée de Fourier.

Dans un cas classique la diversité de fréquence, obtenue en émettant chaque impulsion à une fréquence différente de celle de l'impulsion précédente, permet de résoudre le problème de détection d'échos puissants au-delà de la distance ambiguë, c'est-à-dire des échos de cibles dont la distance ambiguë est telle que le temps de propagation est supérieur à la durée entre impulsions, mais dont l'intensité est suffisamment grande pour qu'ils produisent un écho détectable.

Dans le cas de pré-intégration cohérente exposée précédemment, il n'y a plus cette agilité de fréquence d'impulsion 1 à impulsion 1. Il y a donc un risque de voir apparaître des détections à de fausses distances.

Pour atténuer ce problème, une solution est de permuter d'impulsion à impulsion le code de modulation d'impulsion de manière à ce que deux codes successifs aient une corrélation minimale. Le code de modulation d'impulsion doit être considéré ici comme l'ensemble des codes de modulation appliqués aux sous-impulsions.

La permutation est compensée à la réception afin que les échos non ambigus soient correctement intégrés. Les permutations suivantes peuvent être utilisées :

- Inversion alternative (+1, -1, +1, -1, ....) du sens de la modulation de fréquence des impulsions, conduisant à des pentes inversées ;
- Utilisation de séquences pseudo-aléatoires sur le signe de la pente de modulation.

Les exemples des figures 10a à 11d, 11a à 11d et la figure 12 montrent, selon le rang d'une case donnée, qu'il y a des stratégies de combinaisons des sous-impulsions plus ou moins pertinentes. Comme indiqué relativement à la relation (1) on définit, selon l'invention, un jeu de fonctions de combinaison $f_i$, $i \in [1,z]$, où l'index $i$ repère une certaine zone de cases distance, le nombre total de zones étant z. Pour la zone distance de rang $i$, la compression composite de rang $i$, $C_i$ s'écrit $c_i = f_i(c1_i, c2_i..., cN_i)$.

Dans cette relation, comme indiqué précédemment :

- $c1_i, c2_i..., cN_i$ désignent les vecteurs issus de $N$ compressions de sous-impulsion (réalignées temporellement) correspondant à l'amplitude du signal comprimé. Ces vecteurs correspondent aux deux premières dimensions du cube de données (case distance et case Doppler), plus précisément, pour une cellule $cJ_i$, J désigne l'indice de case Doppler et $i$ désigne l'indice de case distance ;
- $f_i$ désigne une fonction de combinaison des vecteurs issus de $N$ compressions de sous-impulsion. La nature de cette fonction dépend du rang « $i$ » de la case distance, indépendamment de l'intégration Doppler, selon l'indice J.

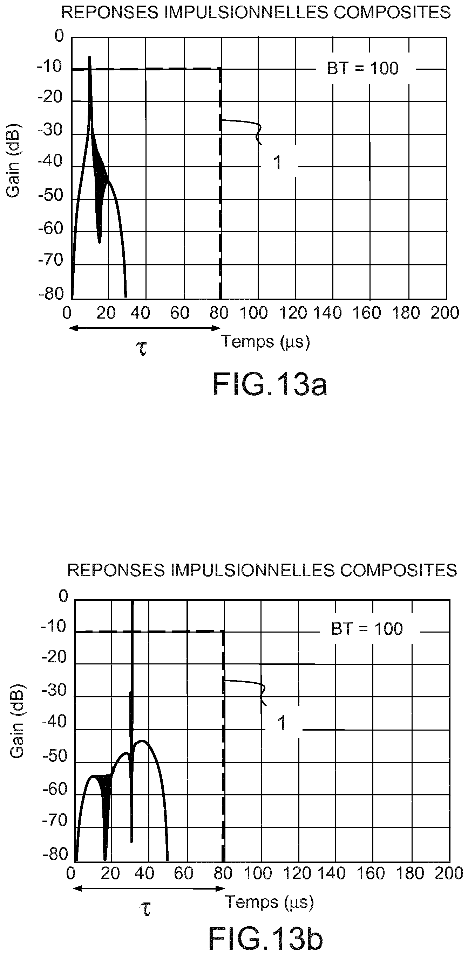

A titre d'exemple on peut utiliser un schéma à trois zones, z étant égal à 3. Les figures 13a à 13f illustrent des compressions distance composites pour six cas de retard. La fonction composite $fi$ diffère selon les cases distances. Cette fonction de combinaison combine en réception les sous-impulsions de façon variable avec la distance de la cible. On connaît a priori l'ordre de grandeur de cette distance.

Pour les cases distances très proches correspondant à des retards inférieurs à la durée $\tau$ de l'impulsion longue, égale à 80 $\mu$s dans le présent exemple, correspondant à un masquage partiel, on utilise par exemple comme fonction composite :

$$f_i(c1_i, c2_i, ..., cN_i) = \psi_E(cN_i)$$

où $\psi_E$ est une fonction de l'amplitude des signaux. Elle s'applique sur la dernière case $cN_i$, c'est-à-dire au signal comprimé issu de la dernière sous-impulsion.

La fonction $\psi_E$ est par exemple une fonction du type $\psi_E(x) = x$. La fonction $\psi_E$ peut être également par exemple une fonction logarithmique, une fonction carrée ou plus généralement une fonction monotone, par exemple croissante.

On n'utilise qu'une fraction de l'énergie contenue dans l'impulsion émise, mais comme il s'agit de cibles situées à courte distance, cette fraction s'avère suffisante pour garantir une détection dans de bonnes conditions. L'objectif est ici de retenir la sous-impulsion comprimée qui est valide même en cas de forte éclipse.

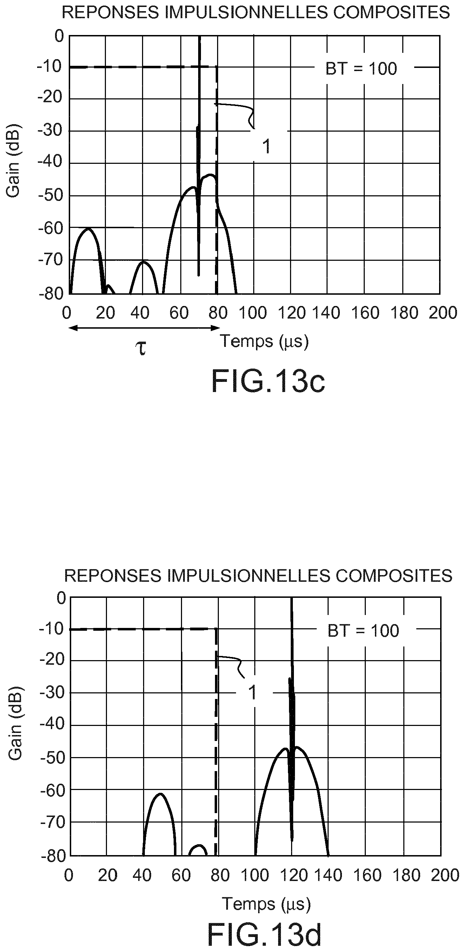

Les figures 13a, 13b et 13c illustrent les réponses impulsionnelles composites $f_i(c1_i, c2_i..., cN_i) = \psi_E(cN_i)$ pour différents masquages partiels, avec $\psi_E(x) = x$. La réponse impulsionnelle composite est donc dans ce cas la réponse impulsionnelle correspondant à la quatrième sous-impulsion.

Les figures 13a, 13b, 13c correspondent respectivement à un retard d'écho reçu de 10 $\mu$s, à un retard de 30 $\mu$s et à un retard de 70 $\mu$s par rapport à au front montant de l'impulsion totale émise 1. La figure 13a illustre donc un masquage partiel fort (88% de l'impulsion totale), la figure 13b un masquage partiel moyen (62% de l'impulsion totale) et la figure 13c un masquage partiel faible (12% de l'impulsion totale).

Pour les cases distances proches, correspondant à un fort rapport Signal/Bruit mais correspondant à des retards supérieurs à la durée de l'impulsion longue (aucun masquage), on utilise par exemple comme fonction composite :

$$f_i(c1_i, c2_i, ..., cN_i) = min \left( \psi_C(c1_i), \psi_C(c2_i), ..., \psi_C(cN_i) \right)$$

où $\psi_C$ est une autre fonction de l'amplitude des signaux.

Comme la fonction $\psi_E$, la fonction $\psi_C$ peut être du type $\psi_C$ (x) = x, ou par exemple une fonction logarithmique, une fonction carrée ou plus généralement une fonction monotone, par exemple croissante. Le domaine en distance concerné correspond notamment :

- Pour des cibles « utiles » de forte SER, à des rapports S/B après compression de chaque sous-impulsion tels que les lobes secondaires des compressions des sous-impulsions soient de l'ordre de grandeur voir supérieurs au niveau du bruit thermique (bruit de fond).
- Pour des cibles « utiles » de faible SER, à des rapports S/B après compression de chaque sous-impulsion suffisamment élevés que la probabilité de détecter la cible après ces compressions soit voisine de 1.

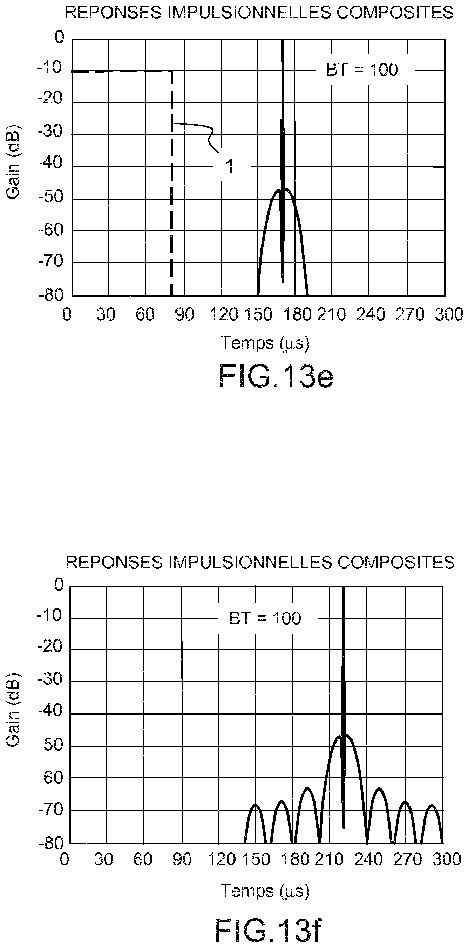

L'objectif est ici de choisir une fonction $f_i$ de combinaisons des compressions qui minimise la réponse secondaire induite par l'orthogonalité imparfaite des codes de chacune des sous-impulsions, $f_i(c1_i, c2_i, ..., cN_i)$ étant égale au minimum de $\psi_C(c1_i), \psi_C(c2_i), ..., \psi_C(cN_i)$. Les figures 13d et 13e illustrent les réponses impulsionnelles, respectivement pour un retard d'écho de 120 $\mu$s et pour un retard d'écho de 160 $\mu$s, en prenant $\psi_C$(x) = x.

Pour les cases distances moyennes à lointaines, on recherche la meilleure sensibilité, donc on cherche à exploiter de la manière la plus efficace les N compressions des sous-impulsions, on utilise par exemple comme fonction composite :

$$f_i(c1_i, c2_i, ..., cN_i) = moy\left(\psi_L(c1_i), \psi_L(c2_i), ..., \psi_L(cN_i)\right)$$

où $\psi_L$ est une autre fonction de l'amplitude des signaux.
$\psi_L$ peut être une fonction du même type que les fonctions $\psi_E$ et $\psi_C$.

La figure 13f illustre une réponse impulsionnelle composite pour un retard très important, très au-delà de la durée d'impulsion $\tau$. Cette figure 13f illustre le cas où $\psi_L$(x) = x.
Les fonctions $f_i$ présentées ci-dessus ne sont que des exemples possibles. Le choix des fonctions « $\psi$ » dépend de la statistique d'amplitude de la cible comparativement à celle des signaux indésirables (bruits, fouillis, interférences possibles, etc.) selon les critères connus du « maximum de vraisemblance ».

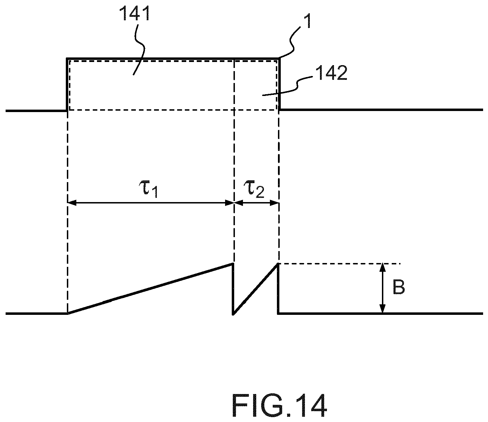

Dans les exemples précédents, les sous-impulsions ont une même durée $\tau$/N. Il est bien sûr possible de choisir d'autres subdivisions de l'impulsion 1. Comme il a été indiqué précédemment, plusieurs formes d'onde sont possibles. La figure 14 illustre un cas particulier où l'impulsion 1 est subdivisée en deux sous-impulsions 141, 142, de durées $\tau_1$ et $\tau_2$ différentes et ayant chacune un code de modulation de même bande B, donc de même résolution en distance. Dans cette forme d'onde, la deuxième sous-impulsion 142 renvoie peu d'énergie mais elle a l'avantage de rencontrer un phénomène d'éclipse faible. L'exemple de la figure 14 peut être généralisé à N sous-impulsions où seule la dernière impulsion est plus courte que les précédentes. Le choix du nombre et de la largeur des sous-impulsions dépend en fait des paramètres de détection que l'on souhaite optimiser.

Un radar selon l'invention peut avantageusement comporter deux chaînes de traitement fonctionnant en parallèle, utilisant les mêmes moyens d'émission et de réception. La première chaîne effectue la détection au moyen de la compression composite décrite précédemment.
La deuxième chaîne utilise les techniques connues de l'homme du métier pour réaliser, par un traitement cohérent, une compression à haute résolution en constituant une bande synthétique à partir de N codes d'impulsions émis chacun autour d'une fréquence porteuse.
Pour la détection des cibles, le radar utilise la première chaîne de traitement tandis que la seconde chaîne de traitement, à haute résolution, fournit simultanément une identification de la cible à partir de son profil d'amplitude d'écho en fonction de la distance.
Le traitement en mode cohérent de la deuxième chaîne n'est possible que dans le cas où le signal est numérisé avant d'être séparé en sous bandes. Le spectre de l'impulsion composée de N sous-impulsions n'est pas uniforme et ne peut être utilisé directement, sinon la réponse impulsionnelle serait mauvaise.

La première étape, connue de l'homme du métier, consiste, par exemple, à égaliser cette réponse spectrale par un filtre de Wiener :

- On définit une réponse spectrale « objectif » $S_{OPT}(f)$, par exemple une fenêtre rectangulaire uniforme encadrant le spectre du signal émis $S_{CAL}(f)$. Le spectre du signal émis est obtenu en prélevant une partie de ce signal à l'émission (signal de calibration), puis en le numérisant et en calculant sa transformée de Fourier.
- La réponse en fréquence du filtre d'égalisation est :

$$H_{EQ}(f) = S_{OPT}(f)/S_{CAL}(f).$$

- Un signal étant reçu r(t) et numérisé à la même cadence que précédemment, on en calcule la transformée de Fourier $R(f)$. Cette représentation spectrale du signal reçu est égalisée en calculant :

$$R_{EQ}(f) = R(f)\, H_{EQ}(f)$$

- La compression d'impulsion à haute résolution est ensuite calculée en utilisant $S_{OPT}(f)$ comme réplique.
- Comme la bande totale de ce signal égalisé est :

$$(N-1)\,\Delta F + B = 26 \text{ MHz dans l'exemple,}$$

contre $B$ = 5 MHz dans le cas du mode « non-cohérent », cette compression en mode cohérent fournit un profil en distance à haute résolution de la cible.

Un intérêt de cette double chaine de traitement utilisant en fait le même signal émis est qu'on peut disposer simultanément :

- Sur la première chaine, « non-cohérente », d'une détection fiable des cibles même si celles-ci sont fortement fluctuantes. L'utilisation d'une résolution en distance de classe « moyenne » évite, de plus, de « découper » la cible, dont la totalité de sa SER est ainsi mise à profit dans le processus de détection sans avoir à mettre en oeuvre un algorithme de recombinaison de points brillants complexe.
- Sur la deuxième chaine, « cohérente », d'un profilage en distance de la cible permettant d'afficher une information permettant de l'identifier « à la volée », c'est à dire sans avoir besoin de l'illuminer à nouveau avec une forme d'onde typiquement dédiée à cette identification.

Plusieurs avantages sont ainsi obtenus :

- Une optimisation du temps « radar » : on réalise deux fonctions avec le même temps d'émission.
- Ce procédé « à la volée » est plus discret car la cible ne peut se rendre compte qu'elle fait l'objet d'une identification particulière. Que la cible ait été vue ou non, elle perçoit la même émission provenant du radar.
- Il est possible de faire un tri automatique des cibles à la volée des cibles détectées, éventuellement en lien avec d'autres senseurs, de manière à faciliter le travail des opérateurs du radar.

**Revendications**

**1.** Procédé de détection radar, utilisant une forme d'onde radar impulsionnelle, une impulsion (1) étant subdivisée en N sous-impulsions jointives (41, 42, 43, 44) ayant chacune une fréquence porteuse propre (F1, F2, F3, F4) modulée selon un code de modulation dans une bande de fréquence, N étant supérieur ou égal à deux, ledit procédé comportant les étapes suivantes :

- créer par filtrage N canaux de réception, adapté chacun à une sous-impulsion (41, 42, 43, 44) ;
- effectuer dans chaque canal une compression de ladite sous-impulsion ;
- réaligner temporellement les sous-impulsions comprimées (41', 42', 43', 44') ;
le signal utile détecté étant obtenu à partir du résultat d'une fonction de combinaison des signaux comprimés réalignés dans N cases distance ($c1_i, c2_i,..., cN_i$), une case distance correspondant à chacune des N compressions d'impulsion, la fonction de combinaison dépendant du rang de la case distance où ladite fonction est appliquée,

**caractérisé en ce qu'**au moins trois zones de distance étant préalablement définies, le résultat de la fonction de combinaison est :

- le signal comprimé (44') de la dernière sous-impulsion pour les cases distances correspondant à la zone de faibles distances ;
- le minimum d'une fonction des amplitudes Ai des N compressions pour les cases distances appartenant à la zone de moyennes distances ;
- la moyenne d'une fonction des amplitudes Ai des N compressions pour les cases distances appartenant à la zone de grandes distances ;

Ai étant l'amplitude du signal comprimé pour la $i^{ème}$ sous-impulsion.

**2.** Procédé de détection radar selon la revendication 1, **caractérisé en ce que** lesdites fonctions sont des fonctions monotones.

**3.** Procédé de détection radar selon la revendication 2, **caractérisé en ce que** lesdites fonctions sont dans la liste des fonctions f(x) suivantes : $f(x) = x$, $f(x) = \log(x)$, $f(x) = x^2$.

**4.** Procédé de détection radar selon l'une quelconque des revendications précédentes, **caractérisé en ce qu'**en réception les signaux étant numérisés avant filtrage, les N compressions sont effectuées en corrélant l'ensemble du signal reçu avec N répliques (91, 92, 93, 94) des sous-impulsions émises (41, 42, 43, 44).

**5.** Procédé de détection radar selon l'une quelconque des revendications précédentes, **caractérisé en ce qu'**une pré-intégration cohérente des signaux est effectuée sur M récurrences de signal à l'issue de chacune des N compressions d'impulsion, M étant supérieur ou égal à deux.

**6.** Procédé de détection radar selon la revendication 5, **caractérisé en ce que** la pré-intégration cohérente est effectuée par une transformé de Fourier discrète sur M points des signaux obtenus dans une case distance donnée au cours desdites M récurrences.

**7.** Procédé de détection radar selon l'une quelconque des revendications 5 ou 6, **caractérisé en ce que** ladite fonction de combinaison des signaux est appliquée après N compressions d'impulsions et M intégrations cohérentes sur M récurrences.

**8.** Procédé de détection radar selon l'une quelconque des revendications 5 à 7, **caractérisé en ce que**, dans les M récurrences, le code modulation est permuté d'impulsion à impulsion.

**9.** Procédé de détection radar selon l'une quelconque des revendications précédentes, **caractérisée en ce que** la bande de modulation (B) est la même pour toutes les sous-impulsions (41, 42, 43, 44).

**10.** Procédé de détection radar selon l'une quelconque des revendications précédentes, **caractérisée en ce que** les sous-impulsions (41, 42, 43, 44) ont même durée.

**11.** Procédé de détection radar selon l'une quelconque des revendications précédentes, **caractérisée en ce que** les fréquences porteuses (F1, F2, F3, F4) sont espacées selon un pas de fréquence constant.

**12.** Procédé de détection radar selon l'une quelconque des revendications précédentes, **caractérisé en ce qu'**au moins deux sous-impulsions ont des codes de modulations différents.

**13.** Procédé de détection radar selon l'une quelconque des revendications précédentes, **caractérisé en ce qu'**au moins une sous-impulsion comporte un code de modulation de fréquence linéaire.

**14.** Procédé de détection radar selon l'une quelconque des revendications précédentes, **caractérisé en ce qu'**au moins une sous-impulsion comporte un code de modulation de phase par paliers.

**15.** Procédé de détection radar selon l'une quelconque des revendications précédentes, **caractérisé en ce que** seule la dernière impulsion (142) est plus courte que les précédentes.

**16.** Procédé de détection radar selon l'une quelconque des revendications précédentes, **caractérisé en ce que** ladite onde radar est émise par un émetteur à état solide.

**17.** Radar, **caractérisé en ce qu'**il comporte une chaîne de traitement mettant en oeuvre le procédé selon l'une quelconque des revendications précédentes, ladite chaîne effectuant la détection d'un signal au moyen de la fonction de combinaison.

18. Radar selon la revendication 17, **caractérisé en ce qu'**il comporte une deuxième chaîne de traitement réalisant une compression à haute résolution des signaux reçus en constituant une bande synthétique à partir des N codes de modulations émis chacun autour de la fréquence porteuse (F1, F2, F3, F4) de sa sous-impulsion correspondante.

19. Radar selon l'une quelconque des revendications 17 ou 18, **caractérisé en ce qu'**il émet l'onde radar au moyen d'un émetteur à état solide.

## Patentansprüche

1. Radardetektionsverfahren, welches eine Impulsradarwellenform verwendet, wobei ein Impuls (1) in N aneinander grenzende Unterimpulse (41, 42, 43, 44) unterteilt ist, welche jeweils eine eigene Trägerfrequenz (F1, F2, F3, F4) besitzen, welche gemäß eines Modulationscodes in einem Frequenzband moduliert sind, wobei N größer oder gleich zwei ist, wobei das Verfahren folgende Schritte beinhaltet:

   - Schaffen von N Empfangskanälen durch Filterung, welche jeweils einem Unterimpuls (41, 42, 43, 44) angepasst sind;
   - Durchführen einer Kompression des Unterimpulses in jedem Kanal;
   - zeitliches Neuausrichten der komprimierten Unterimpulse (41', 42', 43', 44'); wobei das detektierte Nutzsignal aus dem Ergebnis einer Kombinationsfunktion der komprimierten, neu ausgerichteten Signale erzielt wird, welche in N Entfernungsboxen ($c1_i, c2_i..., cN_i$) neu ausgerichtet wurden, wobei eine Entfernungsbox einer jeden der N Impulskompressionen entspricht, wobei die Kombinationsfunktion vom Rang der Entfernungsbox abhängt, wo die Funktion angewendet wird,

   **dadurch gekennzeichnet, dass**, da mindestens drei Entfernungsbereiche zuvor definiert sind, das Ergebnis der Kombinationsfunktion wie folgt lautet:

   - das komprimierte Signal (44') des letzten Unterimpulses für die Entfernungsboxen, die dem Bereich mit geringen Entfernungen entsprechen;
   - das Minimum einer Funktion der Amplituden Ai der N Kompressionen für die Entfernungsboxen, die zu dem Bereich mit mittleren Entfernungen gehören;
   - der Mittelwert einer Funktion der Amplituden Ai der N Kompressionen für die Entfernungsboxen, die zu dem Bereich mit großen Entfernungen gehören;

   wobei Ai die Amplitude des komprimierten Signals für den i$^{ten}$ Unterimpuls ist.

2. Radardetektionsverfahren nach Anspruch 1, **dadurch gekennzeichnet, dass** die Funktionen monotone Funktionen sind.

3. Radardetektionsverfahren nach Anspruch 2, **dadurch gekennzeichnet, dass** die Funktionen in der Liste der folgenden Funktionen f(x) sind: f(x) = x, f(x) = log(x), f(x) = x$^2$.

4. Radardetektionsverfahren nach einem der vorhergehenden Ansprüche, **dadurch gekennzeichnet, dass** im Empfang die Signale vor Filterung digitalisiert werden, wobei die N Kompressionen erfolgen, indem das gesamte empfangene Signal mit N Repliken (91, 92, 93, 94) der gesendeten Unterimpulse (41, 42, 43, 44) korreliert wird.

5. Radardetektionsverfahren nach einem der vorhergehenden Ansprüche, **dadurch gekennzeichnet, dass** eine kohärente Vorintegration der Signale an M Signalwiederholungen nach jeder der N Impulskompressionen erfolgt, wobei M größer oder gleich zwei ist.

6. Radardetektionsverfahren nach Anspruch 5, **dadurch gekennzeichnet, dass** die kohärente Vorintegration durch eine diskrete Fourier-Transformation an in einer gegebenen Entfernungsbox im Zuge der M Wiederholungen erzielten M Signalpunkten erfolgt.

7. Radardetektionsverfahren nach einem der Ansprüche 5 oder 6, **dadurch gekennzeichnet, dass** die Kombinationsfunktion der Signale nach N Impulskompressionen und M kohärenten Integrationen an M Wiederholungen angewandt wird.

8.  Radardetektionsverfahren nach einem der Ansprüche 5 bis 7, **dadurch gekennzeichnet, dass**, in den M Wiederholungen, der Modulationscode von Impuls zu Impuls permutiert wird.

9.  Radardetektionsverfahren nach einem der vorhergehenden Ansprüche, **dadurch gekennzeichnet, dass** das Modulationsband (B) für alle Unterimpulse (41, 42, 43, 44) dasselbe ist.

10. Radardetektionsverfahren nach einem der vorhergehenden Ansprüche, **dadurch gekennzeichnet, dass** die Unterimpulse (41, 42, 43, 44) dieselbe Dauer besitzen.

11. Radardetektionsverfahren nach einem der vorhergehenden Ansprüche, **dadurch gekennzeichnet, dass** die Trägerfrequenzen (F1, F2, F3, F4) nach einem konstanten Frequenzabstand voneinander entfernt sind.

12. Radardetektionsverfahren nach einem der vorhergehenden Ansprüche, **dadurch gekennzeichnet, dass** mindestens zwei Unterimpulse unterschiedliche Modulationscodes besitzen.

13. Radardetektionsverfahren nach einem der vorhergehenden Ansprüche, **dadurch gekennzeichnet, dass** mindestens ein Unterimpuls einen linearen Modulationscode besitzt.

14. Radardetektionsverfahren nach einem der vorhergehenden Ansprüche, **dadurch gekennzeichnet, dass** mindestens ein Unterimpuls einen stufigen Phasen-Modulationscode besitzt.

15. Radardetektionsverfahren nach einem der vorhergehenden Ansprüche, **dadurch gekennzeichnet, dass** der letzte Impuls (142) kürzer als die vorherigen Impulse ist.

16. Radardetektionsverfahren nach einem der vorhergehenden Ansprüche, **dadurch gekennzeichnet, dass** die Radarwelle durch einen Festkörper-Sender ausgesendet wird.

17. Radar, **dadurch gekennzeichnet, dass** er eine Bearbeitungskette beinhaltet, welche das Verfahren nach einem der vorhergehenden Ansprüche umsetzt, wobei die Kette die Detektion eines Signals mit Hilfe der Kombinationsfunktion durchführt.

18. Radar nach Anspruch 17, **dadurch gekennzeichnet, dass** er eine zweite Bearbeitungskette beinhaltet, welche eine hochauflösende Kompression der empfangenen Signale durchführt, indem sie ein synthetisches Band aus den N Modulationscodes bildet, welche jeweils um die Trägerfrequenz (F1, F2, F3, F4) seines entsprechenden Unterimpulses ausgesendet wird.

19. Radar nach einem der Ansprüche 17 oder 18, **dadurch gekennzeichnet, dass** er eine Radarwelle mit Hilfe eines Festkörper-Senders aussendet.

## Claims

1.  Radar detection method, using an impulse radar waveform, a pulse (1) being subdivided into N contiguous sub-pulses (41, 42, 43, 44) each having its own modulated carrier frequency (F1, F2, F3, F4) according to a modulation code in a frequency band, N being greater or equal to two, said method comprising the following steps:

    - creating by filtering N receiving channels, each adapted to a sub-pulse (41, 42, 43, 44);
    - implementing in each channel a compression of said sub-pulse;
    - realigning in time the compressed sub-pulses (41', 42', 43', 44');

    the detected useful signal being obtained from the result of a combination function of the realigned compressed signals in N distance bins ($c1_i$, $c2_i$,..., $cN_i$), a distance bin corresponding to each of the N pulse compressions, the combination function depending on the rank of the distance bin where said function is applied,
    **characterised in that** at least three distance zones being defined beforehand, the result of the combination function is:

- the compressed signal (44') of the last sub-pulse for the distance bins corresponding to the short-distance zone;
- the minimum of a function of the amplitudes Ai of the N compressions for the distance bins pertaining to the medium-distance zone;
- the mean of a function of the amplitudes Ai of the N compressions for the distance bins pertaining to the long-distance zone;

Ai being the amplitude of the compressed signal for the $i^{th}$ sub-pulse.

2.  Radar detection method according to claim 1, **characterised in that** said functions are monotonic functions.

3.  Radar detection method according to claim 2, **characterised in that** said functions are in the list of the following f(x) functions: $f(x) = x$, $f(x) = \log(x)$, $f(x) = x^2$.

4.  Radar detection method according to any one of the previous claims, **characterised in that** on reception the signals being digitised before filtration, the N compressions are implemented by correlating the whole of the received signal with N replicas (91, 92, 93, 94) of the transmitted sub-pulses (41, 42, 43, 44).

5.  Radar detection method according to any one of the previous claims, **characterised in that** a coherent pre-integration of the signals is implemented on M signal recurrences after each of the N pulse compressions, M being greater or equal to two.

6.  Radar detection method according to claim 5, **characterised in that** the coherent pre-integration is implemented by a discrete Fourier transform on M points of the obtained signals in a given distance bin during said M recurrences.

7.  Radar detection method according to any one of claims 5 or 6, **characterised in that** said combination function of the signals is applied after N pulse compressions and M coherent integrations on M recurrences.

8.  Radar detection method according to any one of claims 5 to 7, **characterised in that**, in the M recurrences, the modulation code is permuted from pulse to pulse.

9.  Radar detection method according to any one of the previous claims, **characterised in that** the modulation band (B) is the same for all of the sub-pulses (41, 42, 43, 44).

10. Radar detection method according to any one of the previous claims, **characterised in that** the sub-pulses (41, 42, 43, 44) have the same duration.

11. Radar detection method according to any one of the previous claims, **characterised in that** the carrier frequencies (F1, F2, F3, F4) are spaced according to a constant frequency step.

12. Radar detection method according to any one of the previous claims, **characterised in that** at least two sub-pulses have different modulation codes.

13. Radar detection method according to any one of the previous claims, **characterised in that** at least one sub-pulse comprises a linear frequency modulation code.

14. Radar detection method according to any one of the previous claims, **characterised in that** at least one sub-pulse comprises a stepwise phase modulation code.

15. Radar detection method according to any one of the previous claims, **characterised in that** only the last pulse (142) is shorter than the preceding ones.

16. Radar detection method according to any one of the previous claims, **characterised in that** said radar wave is transmitted by a solid-state emitter.

17. Radar, **characterised in that** it comprises a processing chain implementing the method according to any one of the previous claims, said chain implementing the detection of a signal by means of the combination function.

18. Radar according to claim 17, **characterised in that** it comprises a second processing chain realising a high-resolution compression of the received signals by constituting a synthetic band based on the N transmitted modulation codes each around the carrier frequency (F1, F2, F3, F4) of its corresponding sub-pulse.

**19.** Radar according to any one of claims 17 or 18, **characterised in that** it transmits the radar wave by means of a solid-state emitter.

Blanking d'émission

Durée d'impulsion : LI

Distance minimale

Distance maximale

Durée entre impulsions : PRI

Signal émis

Signal reçu

## FIG.1

Signal émis

Signal reçu

Blanking

Blanking

## FIG.2

F1

F1

F1

F2

F1

F1

F2

## FIG.3

FIG.4

FIG.5

Gain de compression : BT

M post-intégrations

M

FIG.6

FIG.8

Gain de compression : BT/N

N post-intégrations

N intégrations cohérentes sur M impulsion : Gain M

FIG.7

FIG.9

REPONSES IMPULSIONNELLES VOIE 1

FIG.10a

REPONSES IMPULSIONNELLES VOIE 2

FIG.10b

REPONSES IMPULSIONNELLES VOIE 3

FIG.10c

REPONSES IMPULSIONNELLES VOIE 4

FIG.10d

REPONSES IMPULSIONNELLES VOIE 1

FIG.11a

REPONSES IMPULSIONNELLES VOIE 2

FIG.11b

REPONSES IMPULSIONNELLES VOIE 3

FIG.11c

REPONSES IMPULSIONNELLES VOIE 4

FIG.11d

REPONSES IMPULSIONNELLES VOIE 1

FIG.12a

REPONSES IMPULSIONNELLES VOIE 2

FIG.12b

REPONSES IMPULSIONNELLES VOIE 3

FIG.12c

REPONSES IMPULSIONNELLES VOIE 4

FIG.12d

REPONSES IMPULSIONNELLES COMPOSITES

BT = 100

FIG.13a

REPONSES IMPULSIONNELLES COMPOSITES

BT = 100

FIG.13b

REPONSES IMPULSIONNELLES COMPOSITES

FIG.13c

REPONSES IMPULSIONNELLES COMPOSITES

FIG.13d

REPONSES IMPULSIONNELLES COMPOSITES

FIG.13e

REPONSES IMPULSIONNELLES COMPOSITES

FIG.13f

FIG.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2987453

- US 5808580 A